# FASCICULE DE BREVET EUROPEEN

(11) **EP 1 405 003 B1**
(45) Date de publication et mention de la délivrance du brevet: **11.03.2009**
(21) Numéro de dépôt: 02767545.3
(22) Date de dépôt: 02.07.2002
(51) Int. Cl.: F16L 55/10

(54) **AGENCEMENT DE CONNEXION ET DE DECONNEXION DE DEUX TRONCONS DE CANALISATION D'UN SYSTEME DE TRANSFERT DE FLUIDE**
ANORDNUNG ZUM VERBINDEN UND TRENNEN ZWEIER ROHRABSCHNITTE EINES FLUIDÜBERTRAGUNGSSYSTEMS
ARRANGEMENT FOR CONNECTING AND DISCONNECTING TWO PIPE SECTIONS OF A FLUID TRANSFER SYSTEM

(30) Priorité: 03.07.2001 FR 0108815
(43) Date de publication de la demande: 07.04.2004
(73) Titulaire: Societe Europeenne D' Ingenierie Mecanique - Eurodim, 92566 Rueil Malmaison Cedex (FR); KSB S.A., 92635 Gennevilliers Cédex (FR)
(72) Inventeur: DUPONT, Bernard, F-95600 Eaubonne (FR); PAQUET, Stéphane, F-75015 Paris (FR); LAUHLE, René, F-33140 Villeneuve-d'Ornon (FR); GARRIGUES, Jean-Claude, F-33140 Pont-de-la-Maye (FR)
(74) Mandataire: Berger, Helmut
(86) Numéro de dépôt international: PCT/FR2002/002304
(87) Numéro de publication internationale: WO 2003/004925

(56) Documents cités:
- EP-A- 0 080 136
- EP-A- 0 096 209
- FR-A- 2 572 786

## Description

L'invention concerne un agencement de connexion et de déconnexion de deux tronçons de canalisation d'un système de transfert de fluide, chacun constituant l'élément d'extrémité d'une tuyauterie et étant configuré en robinet à papillon pourvu d'un disque monté pivotant à l'intérieur du tronçon autour d'un axe de pivotement entre une position de fermeture de la section transversale d'écoulement de fluide et une position d'ouverture de cette dernière, et un dispositif extérieur de commande du pivotement, les axes de pivotement s'étendant perpendiculairement à l'axe de la canalisation et parallèlement l'un à l'autre.

Des agencements de connexion de ce type sont déjà connus et permettent de connecter entre elles les tuyauteries respectives d'alimentation et de réception d'un fluide dans l'une ou l'autre direction, entre deux postes dont l'un pourrait être un poste fixe et l'autre un poste mobile.

Il est encore connu de prévoir dans les agencements de connexion et de déconnexion connus un déconnecteur d'urgence permettant en situation extrême de dérive ou d'accident, par exemple en cas de feu, l'éloignement du tronçon mobile du tronçon fixe, afin d'éviter d'endommager la structure ou d'arracher les tuyaux tout en assurant le confinement du fluide dans les tuyauteries.

Dans les agencements connus, les axes de pivotement des disques des deux tronçons, à l'état de connexion des tronçons, sont espacés l'un de l'autre, dans la direction axiale des tronçons pour pouvoir effectuer leur mouvement de pivotement entre leurs positions d'ouverture ou de fermeture. Ceci a pour inconvénient que les disques, lorsqu'ils occupent leur position de fermeture, délimitent entre eux un espace relativement important qui est rempli de fluide. Un agencement de connexion de ce type est décrit dans le document FR 2572786. Or, lors d'une déconnexion d'urgence, cette quantité de fluide est rejetée dans l'environnement.

Un tel incident est très grave lorsque les fluides transférés sont dangereux pour les personnes et l'environnement ou impliquent un risque d'incendie. Ceci est notamment le cas pour le transfert du gaz naturel liquéfié (GNL) entre, par exemple, un terminal de chargement ou de déchargement et un bateau méthanier.

La présente invention a pour but de proposer un agencement de connexion et de déconnexion du type défini plus haut, qui ne présente plus l'inconvénient majeur qui vient d'être énoncé.

Pour atteindre ce but, l'agencement de connexion et de déconnexion selon l'invention est caractérisé en ce que les axes de pivotement des disques sont disposés excentriquement par rapport à l'axe des tronçons de façon à réduire l'espace délimité entre les disques dans leur position de fermeture, à l'état de connexion des tronçons.

Selon une caractéristique de l'invention, les axes de pivotement sont décalés perpendiculairement à l'axe des tronçons, de façon symétrique par rapport à cet axe.

Selon encore une autre caractéristique de l'invention, l'espacement entre les deux disques précités lorsqu'ils occupent leur position de fermeture est sensiblement zéro.

Selon encore une autre caractéristique de l'invention, les deux disques précités viennent s'autobuter l'un sur l'autre dans leur position d'ouverture pour annuler les jeux cinématiques et donc toutes vibrations ou battements des disques pouvant être induits par les instabilités de l'écoulement du fluide.

Selon encore une autre caractéristique de l'invention, l'axe de pivotement d'un disque est formé par un arbre monté fixe sur la face arrière du disque.

Selon encore une autre caractéristique de l'invention, l'axe de pivotement d'un disque est disposé hors de la section transversale d'écoulement du fluide du tronçon dans lequel le disque est monté pivotant.

Selon encore une autre caractéristique de l'invention, une patte est fixée à la périphérie d'un disque et l'axe de pivotement est disposé dans l'extrémité libre de cette patte.

Selon encore une autre caractéristique de l'invention, un dispositif de bras articulés est associé à un disque pour assurer son pivotement, l'extrémité libre d'un des bras étant articulée au disque tandis que l'extrémité libre de l'autre bras est articulée à la paroi du tronçon.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est une vue en coupe axiale d'un agencement de connexion et de déconnexion selon l'invention, le long de la ligne I-I de la figure 2, le dispositif de déconnexion n'étant représenté que schématiquement ;
- la figure 2 est une vue en coupe de l'agencement selon la figure 1, en direction de la ligne II-II de la figure 1 et montre l'agencement dans la position de fermeture des disques ;
- la figure 3 est une vue similaire à la figure 2 et montre les disques dans leur position d'ouverture ;
- la figure 4 est une vue de l'agencement selon la figure 2 après une déconnexion d'urgence ;
- la figure 5 est une vue en coupe axiale d'un autre mode de réalisation d'un agencement selon l'invention et illustre les disques dans leur position de fermeture ;
- la figure 6 est une vue similaire à la figure 5 et montre les disques dans leur position d'ouverture, et
- la figure 7 et une vue en coupe le long de la ligne VII-VII de la figure 6.

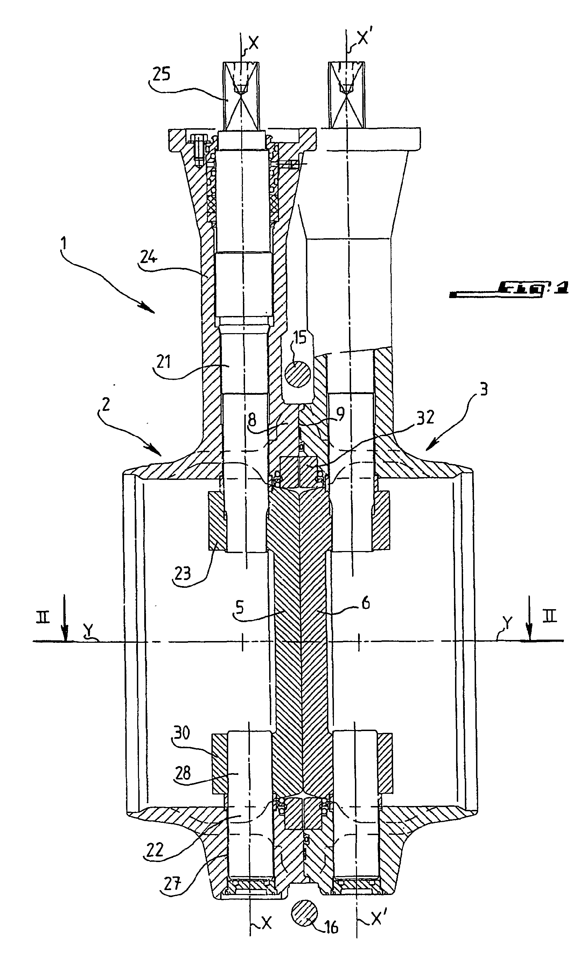

Les figures 1 à 4 montrent un premier mode de réalisation d'un agencement de connexion et de déconnexion des deux tronçons extrêmes des tuyauteries à connecter d'un système de transfert de fluide, tel que du gaz naturel liquéfié, entre deux postes. L'un des postes pourrait être un bateau méthanier et l'autre un terminal de chargement ou de déchargement.

Les figures montrent seulement l'agencement de connexion et de déconnexion qui porte la référence générale 1 et comprend les deux tronçons 2, 3 montés respectivement aux extrémités des tuyauteries des deux postes susmentionnés. Chaque tronçon est réalisé sous forme d'un robinet à papillon et comporte un disque circulaire 5, 6 qui est monté à l'intérieur du tronçon dont la section tranversale d'écoulement de fluide est circulaire en conséquence.

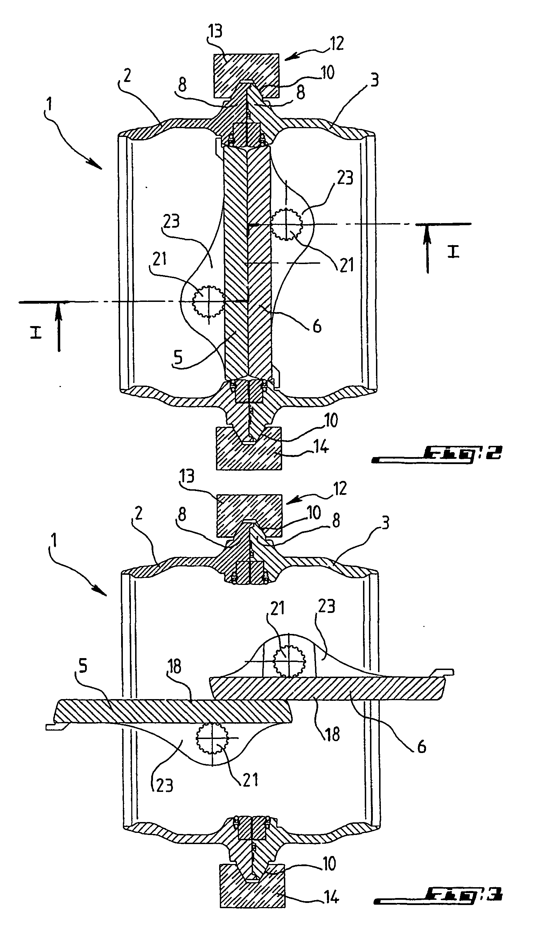

Chaque disque 5 et 6 est monté pivotant à l'intérieur du tronçon 2, 3 auquel il est associé, autour d'un axe respectivement X, X' entre une position de fermeture de la section transversale d'écoulement de fluide, montrée sur les figures 1 et 2, et une position d'ouverture de cette section transversale, illustrée sur la figure 3.

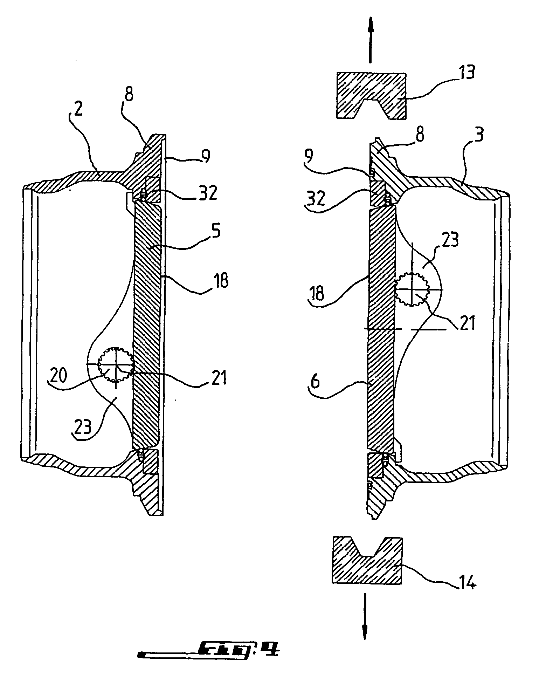

Chaque tronçon ou robinet 2, 3 présente une forme générale cylindrique et est pourvu, à son extrémité adjacente à l'autre tronçon d'un collet annulaire 8 conférant au tronçon une face frontale plane 9. La surface périphérique des deux collets est configurée de telle façon que ceux-ci, à l'état de connexion des deux tronçons 2 et 3, alors axialement alignés, forme un ensemble d'un contour extérieur tronconique 10 destiné à s'engager dans une rainure de forme complémentaire en V d'un dispositif de déconnexion d'urgence indiqué schématiquement en 12 sur les figures 2 et 3 par une couronne. Ce dispositif de déconnexion d'urgence est connu en soi et décrit dans le brevet français n° 2 580 367. Etant donné qu'il ne fait pas partie de l'invention, il ne sera décrit plus en détail. Il suffit d'indiquer, pour la compréhension de l'invention, que la couronne 12 se compose de, par exemple, deux segments de couronne 13, 14 qui, à l'état de connexion des tronçons assurent le blocage des deux tronçons dans leur position de connexion comme le montre la figure 2 et sont susceptibles de se séparer de la manière indiquée sur la figure 4 par des flèches lors d'une déconnexion d'urgence, en libérant ainsi les collets 9 des deux tronçons, ce qui permet la séparation de ceux-ci, comme on le voit également sur la figure 4.

Il est à noter que les deux segments de couronne 13, 14, restent reliés au tronçon 3. Pour plus de détails concernant le dispositif de déconnexion, on se reportera au brevet français n° 2 580 367. Il est encore à noter que ce dispositif de déconnexion d'urgence n'est représenté sur la figure 1 que par les deux éléments circulaires 15 et 16 d'assemblage des deux segments de couronne 13 et 14.

Selon une caractéristique essentielle de l'invention, la face frontale extérieure 18 de chaque disque 5, 6, en position de fermeture, est en alignement avec la face périphérique plane 9 du collet 8 de son tronçon si bien que les deux faces 18 sont en contact l'une avec l'autre à l'état de connexion des deux tronçons 2 et 3.

La faculté des disques 5 et 6 de pouvoir pivoter de cette position de fermeture dans leur position d'ouverture représentée à la figure 3, est assurée par des dispositions appropriées de leurs axes de pivotement.

Selon une autre caractéristique importante de l'invention, dans la position d'ouverture, les deux disques viennent s'autobuter l'un sur l'autre. Cette disposition permet de bloquer les jeux cinématiques et d'empêcher toute vibration ou battement des disques, pouvant être induits par les instabilités de l'écoulement du fluide.

Pour réaliser les deux caractéristiques, l'axe X du disque 5 et l'axe X' du disque 6 sont décalés l'un de l'autre dans la direction de l'axe Y-Y des tronçons, d'une part, et excentrés par rapport à cet axe Y-Y, de façon symétrique, d'autre part. Les écarts sont sensiblement les mêmes dans les deux cas. Ainsi, les deux disques sont en contact l'un avec l'autre dans leur position de fermeture et peuvent pivoter tous les deux autour de leurs axes de manière synchrone pour atteindre la position d'ouverture représentée à la figure 3 dans laquelle les deux disques sont orientés parallèlement à l'axe Y-Y des tronçons tout en étant toujours en contact par une portion de leur surface. Chaque disque a donc exécuté un mouvement de pivotement d'un quart de tour.

L'axe de pivotement de chaque disque est matérialisé par un arbre de manoeuvre 21 et un bout d'arbre 22, qui sont axialement alignés. L'arbre 21 est implanté de façon solidaire en rotation dans une patte de fixation 23 située près de la périphérie du disque, en haut, en faisant saillie de la face arrière de celui-ci et est monté rotatif dans un embout tubulaire extérieur 24 du tronçon. L'extrémité extérieure libre 25 de cet arbre est configurée pour permettre son entraînement en rotation. Le bout d'arbre 22 est implanté par une extrémité en 27 dans le corps du tronçon et reçu par son extrémité 28, de façon librement rotative, dans une patte 30 prévue sur la face arrière du disque près de la périphérie de celui-ci, en bas.

Il est encore à noter qu'un tronçon porte sur sa face frontale plane 9 un joint d'étanchéité annulaire 32 qui est disposé dans un évidement annulaire approprié. Ce joint peut être métallique, plastique ou en un matériau composite.

Les figures 1 à 3 représentent le module 1 en situation connectée par engagement des collets 8 par leur face périphérique tronconique dans la rainure en V de la couronne 12 du dispositif de déconnexion d'urgence. La figure 4 montre les deux tronçons 2 et 3 après une déconnexion d'urgence. On constate, comme cela a été indiqué plus haut, que cette déconnexion se fait par ouverture de la couronne 12, c'est-à-dire par déplacement radial vers l'extérieur des deux segments de couronne 13 et 14.

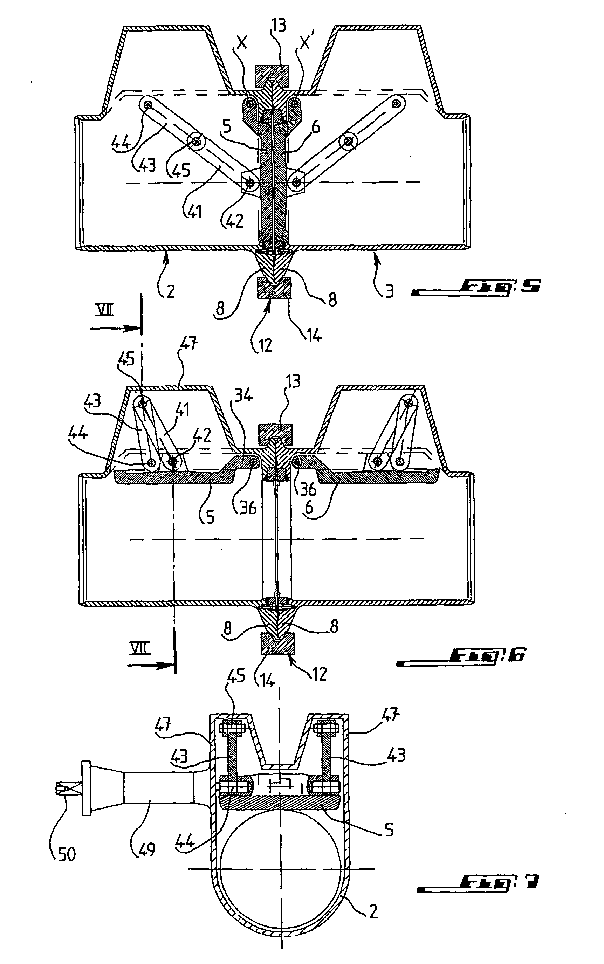

Les figures 5 à 7 montrent un deuxième mode de réalisation d'un module de connexion et de déconnexion 1 selon l'invention. Dans ce mode de réalisation, les axes de pivotement des disques 5 et 6 sont situés hors de la section transversale d'écoulement de fluide des tronçons 2 et 3. A cette fin on a prévu à la périphérie des disques 5 et 6, sur la face arrière de ceux-ci, une patte 34 qui s'étend vers l'extérieur. Dans l'autre extrémité libre de cette patte est implantée un arbre de rotation 36 dont l'axe constitue l'axe de pivotement du disque.

La manoeuvre de chaque disque se fait à l'aide de deux bras articulés, à savoir un premier bras 41 qui est articulé en 42 sur la face arrière du disque et un deuxième bras 43 qui est articulé à son extrémité libre en 44 au corps du tronçon. Les arbres sont articulés l'un à l'autre en 45. Les axes d'articulation des bras s'étendent bien entendu parallèlement à l'axe de pivotement du disque. Comme le montrent les figures, pour permettre le pliage des bras 41 et 43 lors du pivotement du disque dans sa position d'ouverture, représenté sur la figure 6, le tronçon est pourvu d'une excroissance latérale 47 qui permet de recevoir les deux bras alors repliés l'un sur l'autre.

Pour la manoeuvre de son disque d'ouverture et de fermeture 5 ou 6, chaque tronçon est pourvu d'un embout tubulaire 49 de passage de l'arbre de manoeuvre dont l'extrémité de commande extérieure est représentée en 50. L'arbre agit sur le bras 43 au niveau de son articulation 44 sur le feu arrière.

Il est encore à noter qu'en position fermée du disque, les bras articulés 41 et 43 sont alignés, ce qui permet un arc-boutement facilitant la reprise des efforts sur le disque et le verrouillage de la position fermée.

Le second mode de réalisation du module selon l'invention, représenté sur les figures 5 à 7 présente l'avantage que la section transversale d'écoulement du fluide des tronçons est complètement dégagée, ce qui permet un raclage des tuyauteries à l'aide d'un élément piston circulant dans les tuyauteries en étant poussé par un gaz ou un liquide afin de vidanger le fluide véhiculé dans la tuyauterie mobile.

Les deux modes de réalisation de l'invention ont en commun l'avantage que l'espace délimité entre les deux disques, dans leur position de fermeture, est pratiquement zéro si bien que, lors d'une déconnexion d'urgence, après fermeture des disques, comme on le voit sur la figure 4, il n'y a pas de fluide qui pourrait parvenir dans l'environnement. Par conséquent, le risque d'une pollution de l'environnement est exclu. Ainsi, le module selon l'invention est particulièrement adapté au transfert de tout fluide qui est nuisible pour l'environnement, tel que par exemple du gaz naturel liquéfié. Un autre avantage de l'invention réside dans la légèreté du module. Encore un autre avantage de l'invention réside dans le fait que les disques, dans leur position d'ouverture sont maintenus et bloqués, ce qui empêche toute vibration ou battement pouvant être induit par les instabilités de l'écoulement du fluide. Dans le cas du premier mode de réalisation les disques sont plaqués l'un contre l'autre dans leur position d'ouverture, comme on le voit sur la figure 3. Dans le deuxième mode de réalisation, les disques sont plaqués contre une zone de butée des tronçons.

Bien entendu de multiples modifications peuvent être apportées aux modes de réalisation décrits et représentés. Ainsi on pourrait placer, dans le cadre du second mode de réalisation, les axes d'articulation des disques de façon diamétralement opposée.

## Revendications

1. Agencement de connexion et de déconnexion de deux tronçons de canalisation d'un système de transfert de fluide, chacun constituant l'élément d'extrémité d'une tuyauterie et étant configuré en robinet à papillon pourvu d'un disque monté pivotant à l'intérieur du tronçon autour d'un axe de pivotement entre une position de fermeture de la section transversale d'écoulement de fluide du tronçon et une position d'ouverture de cette section transversale d'écoulement, les axes de pivotement s'étendant perpendiculairement à l'axe de la canalisation et parallèlement l'un à l'autre, **caractérisé en ce que** les axes de pivotement (X, X', 21, 36) des disques (5, 6) sont disposées excentriquement par rapport à l'axe (Y-Y) des tronçons (2, 3) de façon à réduire l'espace délimité entre les disques (5, 6) dans leur position de fermeture, à l'état de connexion des tronçons (2, 3).

2. Agencement selon la revendication 1, **caractérisé en ce que** les axes de pivotement (X, X', 21), sont décalés perpendiculairement à l'axe (Y-Y) des tronçons, de façon symétrique par rapport à cet axe.

3. Agencement selon la revendication 2, **caractérisé en ce que** l'espace entre les deux disques précités (5, 6) lorsqu'ils occupent leur position de fermeture est sensiblement zéro.

4. Agencement selon la revendication 3, **caractérisé en ce que** les deux disques précités (5, 6) viennent s'autobuter l'un sur l'autre dans leur position d'ouverture pour empêcher des jeux cinématiques et des vibrations ou battements des disques pouvant être induits par les instabilités de l'écoulement du fluide.

5. Agencement selon l'une des revendications 2 à 4, **caractérisé en ce que** l'axe de pivotement d'un disque (5, 6) est formé par un arbre (21) monté solidaire en rotation sur la face arrière du disque.

6. Agencement selon la revendication 1, **caractérisé en ce que** l'axe de pivotement (36) d'un disque (5, 6) est disposé hors de la section transversale d'écoulement du fluide du tronçon (2, 3) dans lequel le disque est monté pivotant.

7. Agencement selon la revendication 6, **caractérisé en ce qu'**une patte (34) est fixée à la périphérie d'un disque (5, 6) et **en ce que** l'axe de pivotement (36) est disposé dans l'extrémité libre de cette patte (34).

8. Agencement selon l'une des revendications 6 ou 7, **caractérisé en ce qu'**un dispositif de bras articulés (41, 43) est associé à un disque (5, 6) pour assurer son pivotement, l'extrémité libre d'un (41) des bras étant articulée au disque tandis que l'extrémité libre de l'autre bras (43) est articulée en (44) à la paroi du tronçon.

9. Agencement selon l'une des revendication 7, **caractérisé en ce que** le tronçon (2, 3) comporte une excroissance latérale (47) de logement des bras articulés (41, 43) dans la position d'ouverture du volet.

10. Agencement selon les revendications 6 à 9, **caractérisé en ce que** les bras articulés (41, 43) sont en position arc-boutée lorsque les disques (5, 6) sont en position fermée.

## Claims

1. An arrangement for connecting and disconnecting two pipe sections of a fluid transfer system, each composing the end member of a pipeline and being configured as a butterfly valve provided with a disk pivotingly mounted inside the section about a swivel axis between a closing position of the fluid flow cross-section of the section and an opening position of this flow section, with the swivel axes extending perpendicularly to the axis of the pipe and in parallel to each other, **characterized in that** the swivel axes (X, X', 21, 36) of the disks (5, 6) are arranged eccentrically with respect to the axis (Y-Y) of the sections (2, 3) so as to reduce the space defined between the disks (5, 6) in the closing position thereof, in the connected state of the sections (2, 3).

2. The arrangement according to claim 1, **characterized in that** the swivel axes (X, X', 21) are shifted perpendicularly to the axis (Y-Y) of the sections symmetrically with respect to this axis.

3. The arrangement according to claim 2, **characterized in that** the space between the two above-mentioned disks (5, 6) is substantially zero when they are in the closing position thereof.

4. The arrangement according to claim 3, **characterized in that** the two above-mentioned disks (5, 6) automatically come into abutment with each other in the opening position thereof in order to prevent kinematic play and vibration or flutter of the disks that may be induced by the instabilities of the fluid flow.

5. The arrangement according to any of claims 2 to 4, **characterized in that** the swivel axis of a disk (5, 6) is formed by a shaft (21) rotatingly integrally mounted to the back face of the disk.

6. The arrangement according to claim 1, **characterized in that** the swivel axis (36) of a disk (5, 6) is arranged outside of the fluid flow cross-section of the section (2, 3), wherein the disk is pivotingly mounted.

7. The arrangement according to claim 6, **characterized in that** a lug (34) is attached to the periphery of a disk (5, 6), and that the swivel axis (36) is arranged in the free end of this lug (34).

8. The arrangement according to any of claims 6 or 7, **characterized in that** a device having hinge arms (41, 43) is associated with a disk (5, 6) in order to ensure pivoting thereof, the free end of one (41) of the arms being hinged at the disk whereas the free end of the other arm (43) is hinged at (44) to the section wall.

9. The arrangement according to claim 7, **characterized in that** the section (2, 3) comprises a lateral boss (47) for housing the hinge arms (41, 43) in the opening position of the flap.

10. The arrangement according to claims 6 to 9, **characterized in that** the hinge arms (41, 43) are in a braced position when the disks (5, 6) are in a closed position.

## Patentansprüche

1. Anordnung zum Verbinden und Trennen zweier Rohrabschnitte eines Fluidübertragungssystems, wobei jeder das Endstück einer Rohrleitung bildet und als Drosselklappenventil ausgestaltet ist, das mit einer Scheibe versehen ist, die in dem Abschnitt um eine Schwenkachse herum zwischen einer Schließposition des Fluidfließquerschnitts des Abschnitts und einer Öffnungsposition dieses Fließquerschnitts schwenkbar angebracht ist, wobei die Schwenkachsen sich zur Achse des Rohrs rechtwinklig und zueinander parallel erstrecken, **dadurch gekennzeichnet, dass** die Schwenkachsen (X, X', 21, 36) der Scheiben (5, 6) im Verhältnis zur Achse (Y-Y) der Abschnitte (2, 3) exzentrisch angeordnet sind, um den Zwischenraum, der zwischen den Scheiben (5, 6) in ihrer Schließposition begrenzt ist, im angeschlossenen Zustand der Abschnitte (2, 3) zu reduzieren.

2. Anordnung nach Anspruch 1, **dadurch gekennzeichnet, dass** die Schwenkachsen (X, X', 21) rechtwinklig zur Achse (Y-Y) der Abschnitte im Verhältnis zu dieser Achse symmetrisch versetzt sind.

3. Anordnung nach Anspruch 2, **dadurch gekennzeichnet, dass** der Zwischenraum zwischen den beiden genannten Scheiben (5, 6) im Wesentlichen gleich Null ist, wenn diese sich in ihrer Schließposition befinden.

4. Anordnung nach Anspruch 3, **dadurch gekennzeichnet, dass** die beiden genannten Scheiben (5, 6) in ihrer Öffnungsposition automatisch aneinander anschlagen, um kinematisches Spiel und Vibrationen oder Schlagbewegungen der Scheiben zu verhindern, die durch Schwankungen im Fluidfluss herbeigeführt werden können.

5. Anordnung nach einem der Ansprüche 2 bis 4, **dadurch gekennzeichnet, dass** die Schwenkachse einer Scheibe (5, 6) durch eine Welle (21) gebildet wird, die drehbar mit der Rückseite der Scheibe einstückig angebracht ist.

6. Anordnung nach Anspruch 1, **dadurch gekennzeichnet, dass** die Schwenkachse (36) einer Scheibe (5, 6) außerhalb des Fluidfließquerschnitts des Abschnitts (2, 3) angeordnet ist, wobei die Scheibe schwenkbar angebracht ist.

7. Anordnung nach Anspruch 6, **dadurch gekennzeichnet, dass** eine Krempe (34) am Umfang einer Scheibe (5, 6) befestigt ist, und dass die Schwenkachse (36) in dem freien Ende dieser Krempe (34) angeordnet ist.

8. Anordnung nach einem der Ansprüche 6 oder 7, **dadurch gekennzeichnet, dass** eine Vorrichtung mit Gelenkarmen (41, 43) einer Scheibe (5, 6) zugeordnet ist, um deren Verschwenken sicherzustellen, wobei das freie Ende eines (41) der Arme an der Scheibe angelenkt ist, während das freie Ende des anderen Arms (43) bei (44) an der Abschnittswand angelenkt ist.

9. Anordnung nach Anspruch 7, **dadurch gekennzeichnet, dass** der Abschnitt (2, 3) eine seitliche Ausstülpung (47) zum Aufnehmen der Gelenkarme (41, 43) in der Öffnungsposition der Klappe umfasst.

10. Anordnung nach Anspruch 6 bis 9, **dadurch gekennzeichnet, dass** sich die Gelenkarme (41, 43) in einer abgestützten Position befinden, wenn die Scheiben (5, 6) in einer geschlossenen Position sind.
